# EUROPEAN PATENT SPECIFICATION

(11) **EP 1 090 242 B1**
(45) Date of publication and mention of the grant of the patent: **30.10.2002**
(21) Application number: 99926290.0
(22) Date of filing: 21.06.1999
(51) Int. Cl.: F16L 9/12, F16L 11/08

(54) **UNBONDED FLEXIBLE PIPES AND METHOD FOR THE PRODUCTION THEREOF**
UNVERKLEBTER BIEGSAMER SCHLAUCH UND VERFAHREN ZUR HERSTELLUNG DESSELBEN
TUYAU FLEXIBLE NON COLLE ET PROCEDE DE PRODUCTION DUDIT TUYAU

(30) Priority: 22.06.1998 DK 81798; 22.06.1998 US 90199 P
(43) Date of publication of application: 11.04.2001
(73) Proprietor: NKT Cables A/S, 2605 Bröndby (DK)
(72) Inventor: PROCIDA, Inger-Margrete, DK-2900 Hellerup (DK); MARCHER, Bj rn, DK-2670 Greve (DK)
(74) Representative: Hegner, Anette
(86) International application number: DK9900341
(87) International publication number: WO99067560

(56) References cited:
- EP-A1- 0 569 101
- FR-A1- 2 747 175
- NO-B- 165 126
- SE-B- 445 383
- US-A- 5 275 209

## Description

The present invention relates to a flexible, high-pressure and high-temperature pipe which is particularly suitable for the transportation of oil/gas (or hydrocarbons) in connection with oil production in offshore fields and to other transportation of oil/gas, and to a method for the production of such flexible pipes.

In the transportation of oil and gas products, a combination of more or less complex demands have to be met, as the transportation often takes place over long distances and at high temperatures, and between localities which may be mutually movable, e.g. ship and platform or bottom and floating platform. The pipes used in this connection should therefore meet complex demands of different types as will appear from below.

The pipes may be very long, often several kilometers. At the same time they should possess a sufficient degree of flexibility for allowing them to be wound into coils and onto revolving platforms in order that they may be transported to their site of use. The pipes should be able to stand being wound into and unwound from the coils and revolving platforms at temperatures of typically down to -20 °C, and further be able to tolerate at least up to 100 °C, preferably up to 150 °C, during oil transportation and the like. A further demand placed on the pipes is their capability for standing mechanical stress, such as high pressures, e.g. a pressure of more than 10 mPa (100 bars), pressure variations, tensile forces caused by the conditions below the sea surface. Further they should possess good barrier properties to both oil/gas (or hydrocarbons) and sea water.

The life of flexible pipes of this type should typically amount to 20 years without any risk of oil spill. The risk of pollution due to leakage is completely unacceptable, and it is therefore imperative that the pipes are flawless when put into use.

Flexible pipes for the application mentioned above are described in e.g. EP-B1-0487691 and WO 96/30687.

A flexible pipe of the above mentioned type may e.g. comprise an inner flexible metal cylinder. The design of said cylinder may vary, and one example thereof comprises a metal carcass, the purpose of which is mainly to provide the pipe with the necessary mechanical strength against collapse, including ensuring that the cross section of the pipe remains the same irrespective of any external impact exerted on the pipe. As used herein carcass means mutually engaging profiled metal bands. Said bands ensure proper flexibility of the pipe. This inner, flexible, liquid-permeable cylindrical metal body may also have other forms, e.g. the form of a corrugated metal pipe. The inner diameter of such pipe will normally be up to e.g. 50.8 cm (20 inches).

Round the metal carcass is typically a barrier layer consisting of a plastics material, the purpose of which is to provide the pipe with the necessary barrier properties against the product to be transported in the pipes. Optionally there may be several such barrier layers.

In addition, a typical pipe comprises a number of reinforcement layers, e.g. consisting of metal bands or wires wound in helical form with e.g. a C-profile and a rise of 80-90°, rendering the pipe resistant to radial pressure and at the same time providing the pipe with a high degree of flexibility. As used herein rise means the angle between the longitudinal axis of the metal band and the longitudinal axis of the pipe.

The second layer, which e.g. may be comprised of a flat or a round metal wire wound in helical form with a rise of about 35°, provides the pipe with the necessary tensile strength. Typically two layers are involved, wound in opposite directions in order to equalize the torsional forces.

In order to ensure movability of the metal layers relative to each other, one or more winding layers may be provided between said metal layers.

Finally, the outer layer may comprise an outer sheath consisting of extruded termoplastics, e.g. polyethylene or polyamide for protection against penetration of sea water with possible resultant corrosion.

All these layers are typically assembled at each end of the pipe in an endfitting made from e.g. carbon steel, to which each of the above mentioned layers is secured.

As already mentioned above, a finished flexible pipe may often be very long and be provided with an endfitting at each end, but due to its flexible structure it may be wound onto large revolving platforms or coils, which facilitates handling significantly.

In the prior art pipes of the above mentioned type, the barrier layer is typically produced by extrusion of polymers, such as polyethylene (PE), polyamide (PA) or polyvinylidene fluoride (PVDF).

However, pipes, in which the inner barrier layer is made of these polymers, have some significant shortcomings, as the polymer materials do not live up to the requirements outlined above.

Polyethylene (PE) thus has limited barrier properties to gases which typically are present in crude oil and natural gas deposits, including in particular carbon dioxide, methane and hydrogen sulphide. This means in practice that these gases can migrate through the sealing layer out to the metal reinforcement elements, where they may cause corrosion (as regards carbon dioxide and hydrogen sulphide) or build-up of an undesired high pressure. An undesired high pressure at the metal reinforcement elements can result in disruption of the outer sheath with resultant penetration of sea water, which thereafter will lead to corrosion of the reinforcement elements.

It is an additional limitation to the use of PE that flexible pipes with barrier layers of this material can be used only at relatively low temperatures of up to about 60 °C.

Of polyamides, usually polyamide-11 or polyamide-12 is used, which have good resistance to crude oil, whereas at high temperatures they tend to undergo undesired hydrolysis in the presence of water. In case of offshore applications the water content may increase during the life of the field, and thereby the barrier layer is gradually exposed to water at such an elevated temperature. The amide bonds are consequently hydrolyzed with resultant decomposition of polymer chains, which results in a considerable reduction of the mechanical strength.

The polyamides also have an undesired high permeability to various gases and liquids, such as e.g. methane, carbon dioxide, hydrogen sulphide, and water. In particular it should be mentioned that even a minor degree of hydrolysis may result in a higher permeability, whereby the above gases and liquids can migrate faster through the barrier layer out to the metal reinforcement elements, which may give rise to corrosion or build-up of an undesired high pressure, as mentioned earlier, which may cause mechanical rupture in the reinforcement elements. As a result, the life of the pipe is reduced to an unacceptable level.

Barrier layers consisting of PVDF have good barrier properties to both the above gases and liquids, whereas PVDF is extremely difficult to process.

In a pure state, the PVDF material is comparatively notch sensitive, meaning tendency to disrupt when exposed to impacts near an incision or a notch shaped recess in the material. This phenomenon especially arises in case of brittle materials, and as regards polymer materials the notch sensitivity is particularly high at temperatures significantly below the glass transition temperature Tg of the polymer material. Notch sensitivity can e.g. be measured by the so-called Izod impact resistance test accoding to ASTM D256. The higher energy required for forming a crack, the smaller notch sensitivity.

A low molecular plasticizer is consequently often added to PVDF, which makes the material more easy to process and reduces the notch sensitivity. A much used plasticizer is dibutyl sebacate (DBS). However, this plasticizer can migrate out and thereby result in undesired changes in the properties of the barrier layer, such as a more rigid material, and changed dimensions due to volume reduction.

Prior art flexible pipes comprising barrier layers of the above-mentioned plastics types, of course, all have different limitations and hence limited possibilities of use.

Thus, the object of the present invention is to provide flexible pipes which are particularly well suited for the transportation of oil and gas products, in particular pipes which do not suffer from the drawbacks in use or in life associated with the prior art pipes.

A particular object of the present invention is to provide long-life, flexible pipes which further comprise barrier layers with a particularly low notch sensitivity, said barrier layer being provided by one-piece extrusion.

A further object of the present invention is to provide flexible pipes with good thermo-insulating properties, ensuring that the major part of the temperature drop takes place above the barrier layer, thereby resulting in a low temperature in the reinforcement layer. This reduces the diffusion rate and hence the corrosion rate and generates a smaller gas pressure.

Furthermore, it is the object of the present invention to provide flexible pipes having a barrier layer with a particularly low solubility to gases. Thus no gas pockets or blisters are formed by the gas in case of a sudden decompression during abnormal operation. This is considered good blister properties.

Furthermore, it is the object of the present invention to provide flexible pipes having a barrier layer with a particularly low permeability to gases, in particular H₂S and CO₂, in order to reduce corrosion of the reinforcement layer.

These objects are achieved by the flexible pipe according to the invention, as recited in claim 1.

As used herein unbonded means that the individual layers are not bonded together and therefore are allowed to slide relative to each other in the longitudinal direction of the pipe.

Flexible pipes according to the invention comprise at least one inner barrier layer comprising aliphatic polyketones having the general formula I:

[[-CHR₁CH₂(C=O)-]ₙ[-CHR₂CH₂(C=O)-]ₘ]ₚ (I)

where R₁ and R₂ are mutually different and independently mean hydrogen or an alkyl group, preferably methyl-, ethyl-, propyl-, pentyl-, or heptyl-, and n + m = 1, where n is preferably less than 0.5, more preferably between 0.02 and 0.8, and p is an integer, preferably an integer between 500 and 5000, and where the two comonomers are randomly distributed or blocked. The pipes of the invention have been found to be particularly suitable for transportation of oil and gas products.

The flexible pipes of the invention may comprise several barrier layers, of which at least one comprises an aliphatic polyketone as defined above. The other layers, if any, may be of the same material or they may be constituted by some of the above-mentioned PE, PA, or PVDF types. An inner layer of PE can e.g. provide a smooth surface in the extrusion of the polyketone and at the same time reduce the costs of the product. Furthermore, three barrier layers may be provided, of which e.g. the middle layer may consist of polyketone, whereas the two other layers may be made of PE.

The barrier layer comprising aliphatic polyketones (in the following simply referred to as the barrier layer) has a very low permeability to CH₄ and CO₂ and thus provides a good barrier to oil and gases. A technical documentation by Shell Chemicals (Carilon Polymers Oil and Gas Applications, Shell Chemicals SC:2643-98, 09/21/98) compares gas permeability of CH₄, H₂S and CO₂ through an aliphatic polyketone with the permeability through HDPE and PA-11. The permeability through PA-11 is about twice as high as through the polyketone, whereas the permeability through HDPE is 5 to 10 times higher than through the polyketone. In terms of barrier properties, the aliphatic polyketone is thus better than PA-11 and HDPE. In addition, the barrier layer has a high mechanical strength and is resistant to bending and stretching.

The good barrier properties reduce the problems associated with stress corrosion (e.g. SSIC - Sulfide Stress Induced Cracking) and hydrogen indiced cracking (HIC), thus allowing use of high-tensile steel for reinforcement.

Moreover, the flexible pipes of the invention have a substantiated chemical resistancy, as the barrier layer has been found to be highly insensitive to hydrolysis, meaning that no problems arise even in case of a high content of water in the oil and gas products. Besides, the barrier layer does not swell when contacted with hydrocarbons.

In addition, the barrier layer has a low solubility to gases, thus avoiding the formation of blisters in connection with a sudden decompression.

It has been found that aliphatic polyketones as a material group have a low notch sensitivity and may be processed without the addition of a plasticizer. As mentioned in e.g. WO 98/14513, a plasticizer may, however, be added provided that the plasticizer is not of a low molecular type and that the addition thereof does not result in any undesired changes in the mechanical properties of the barrier layer.

It is preferred to use a continuous flexible pipe according to the invention for the transportation of oil/gas under high pressure and for offshore use, e.g. below the sea surface, i.e. a pipe often of a length of at least 50 meters, which typically comprises a number of different layers.

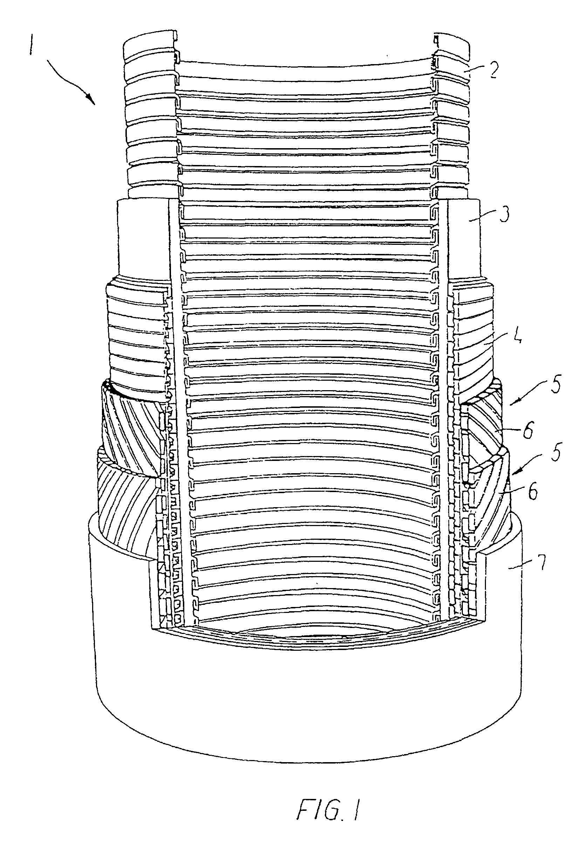

Fig. 1 illustrates the structure of an embodiment of an unbonded flexible pipe according to the invention.

The flexible pipe 1 shown in Fig. 1 comprises an inner metal cylinder (2) which serves to ensure the necessary mechanical strength and flexibility of the pipe. As shown in Fig. 1, this metal cylinder is provided by the winding-up in a helical form with a slight rise of a metal band, preferably of stainless steel, the cross section of which has an Z or an S shape. The metal cylinder may also have other forms, e.g. that of a corrugated pipe. It should be emphasized that this layer is not imperative for the structure of the pipe according to the invention, and thus it may be excluded in other embodiments.

The layer (3) is an inner liquid-impervious barrier layer provided by continuous extrusion of a single-phase aliphatic polyketone polymer as recited in claim 1. The purpose of this layer is to provide the pipe with the necessary impermeability to the product to be transported in the pipe. Preferably the layer has a thickness of 5 to 12 mm. Optionally several layers of the same material may be used.

The layer (4) is a reinforcement layer consisting of a metal band wound in a helical pattern, preferably with a C-profile, said layer providing resistance to radial pressure and at the same providing suitable flexibility. Other cross-section may also be used.

The tensile reinforcement layers (5) each consists of a number of metal wires (6) wound in a helical pattern, in said case of a rectangular cross-section, but metal wires of other cross-sections may also be used. In order to render the pipe torsion free, the two layers are wound in opposite directions.

The outer layer (7) is a sheath which serves to protect the flexible pipe against penetration of sea water and against damage related to the laying out of the pipe. The layer is typically provided by extrusion of a thermoplastics. The pipe typically has a diameter, calculated as the inner diameter of the metal carcass - or in embodiments with no such metal carcass - calculated as the inner diameter of the barrier layer, of at least 5 cm, preferably at least 15 cm.

Thus, the flexible pipe according to the invention comprises an inner liquid-impervious barrier layer. This barrier layer is usually extruded in one piece. In particular it is preferred that the polymer material used is a single-phase polymer material comprising 90% by volume or more, preferably at least 95 % by volume, of an aliphatic polyketone having the formula (I)

[[-CHR₁CH₂(C=O)-]ₙ[-CHR₂CH₂(C=O)-]ₘ]ₚ (I)

wherein R₁ and R₂ have the meanings defined above.

Preferred compounds are those wherein R₁ is CH₃, R₂ is H, and n is less than 0.10, preferably between 0.02 and 0.08, or wherein R₁ is alkyl, R₂ is H, and n is less than 0.10, and p is an integer between 500 and 5000, and where the two comonomerss are randomly distributed. However, it is particularly preferred that n = 0, and R₂ is H, or that R₁ is CH₃ and R₂ is H.

A suitable polymer material comprises Carilon® terpolymer, wherein R₁ is CH₃, and R₂ is H, n is about 0.05 and m is about 0.95, and p is between 500 and 5000 (sold by Shell Chemical Company). A brochure issued by Shell (Carilon® Thermoplastic Polymers) states that these materials are suitable for all kinds of processing, such as injection moulding, blow moulding, rotational casting and extrusion. It further mentions that the materials can be used for fibres, films, coatings, package materials, pipe pieces and more, as normally described in such sales brochures. It further mentions that these materials are suitable for automatic fuel systems. Carilon® polymer materials are said to have good barrier properties to fuels and their fumes.

Now it has surprisingly been found that a single-phase aliphatic polyketone polymer as recited in claim 1 can be used for the liquid-impervious barrier layer in flexible unbonded, continuous pipes for high-pressure use.

Thus, it has surprisingly been found that single-phase aliphatic polyketone polymers when used as liquid-impervious barrier layers in flexible pipes according to the invention can stand being bent and stretched at temperatures down to typically -20 °C and up to about 100 °C, and that the notch sensitivity of the materials in such use is satisfactorily low.

Furthermore, a flexible pipe according to the invention having a barrier layer of such single-phase aliphatic polyketone polymer has been found to exhibit particularly good thermo-insulating properties, and such flexible pipe has also been found to enjoy good blister properties. Further, this material exhibits a particularly low permeability to H₂S and CO₂, meaning that flexible pipes according to the invention having a barrier layer consisting of a single-phase aliphatic polyketone polymer and metal reinforcements as explained above enjoy a particularly high protection against corrosion.

However, a particular important property exhibited by the single-phase aliphatic polyketone polymer is that it can be extruded continuously without disruptions and hence without formation of stiff or weak areas in the material. This allows production of long lengths of flexible unbonded pipes. As used herein "long lengths" mean tubular lengths of at least 50 meters, preferably of at least 200 meters.

The liquid-impervious barrier layer typically has a thickness of 5 to 12 mm, preferably of 6 to 10 mm. In case of flexible pipes without a tubular inner metal cylinder, it is, however, recommendable to use a thicker barrier layer, e.g. of up to 20 mm, as the pipe will otherwise collapse in connection with bending and winding-up.

Another suitable polymer material comprises Ketonex terpolymer, test marketed by General Electric Plastics in cooperation with BP Chemicals. The chemical composition is substantially as the one described above.

Besides, it is the object of the invention to provide a method for the production of the above mentioned flexible pipes.

As far as the pipe type of the present invention is concerned, it it of utmost importance that extrusion can be effected continuously for a prolonged period of time, as assembly of pipe pieces with endfittings in other places of a pipe section than by its ends should be avoided. Such endfittings are costly and further contribute to a more stiff pipe section. Pipe sections with endfittings provided in other places than by their ends thus result in a comparatively stiff pipe section, which is difficult to handle.

Besides, it is of utmost importance that the extrusion can be effected in a continuous proces and without any significant disruptions for a prolonged period of time, as pipes for use in the transportation of oil and the like require that the flexible pipe section contains no assemblies of barrier layers. As mentioned above, it is also important that the barrier layer in the pipe is in perfect condition, as repair work on the layer is not possible.

It has now been found that the method according to the invention, as recited in claim 14, provides such a continuous extrusion for obtaining the desired pipe type in lengths of at least 50 meters.

Surprisingly it has been found that extrusion of aliphatic polyketones with the formula (I) at a temperature close to that of their melting point produces a barrier layer with particularly good properties.

In a conventional extrusion process, the polymer will typically be heated to a temperature far above that of its melting point in order to lower the viscosity of the melt. As far as aliphatic polyketones are concerned, it has been found that the polymer, due to its cross-binding (presumably by the so-called aldol condensation wherein two polymer chains react and form a beta hydroxyketone which again react by water separation so as to form a carbon-carbon double binding), as a result of a too high temperature and an excessive retention time produces an increased viscosity, which again results in an increased viscous energy metabolism in the polymer, causing the cross-binding to be self-reinforcing. In zones of the processing equipment where the flow is particularly slow, the melt may not move at all, said zones being referred to as dead zones. In said zones an increasing decomposition of the material gradually takes place, and the result thereof is often that the production has to be suspended after a short period in order to allow cleaning of the equipment. This short operation time does not allow production of long lengths of flexible pipes.

For numerous pipe types, e.g. pipes of modest length and thickness, this does not constitute a problem, and thus use of this type of polymer in the production of thin pipes or co-extruded pipes intended for e.g. gasoline tubings in cars, is known from e.g. US 5,232,786 and JP 10002258 A.

Thus, it has previously not been known to use polyketones for the production of flexible pipes of the type defined in the application for the transportation of oil and gas products.

However, use of the method according to the present invention, as recited in claim 14, avoids these problems.

Efficient control of the temperature conditions in the processing equipment thus prevents said dominant decomposition mechanism (aldol condensation).

Thus, several, closely nabouring double bindings result in a product without heavily branched chains and without any discolouring, which would otherwise be expected in connection with a conventional processing process.

The method according to the invention for the production of a flexible, unbonded high-pressure pipe optionally comprises the provision of a metal carcass followed by the provision of a liquid-impervious barrier layer by continuous extrusion, a subsequent reinforcement with at least one layer of metal band, the provision of a liquid-impervious, tubular outer sheath, and the assembly of the provided tubular parts, and the sealing of said parts in an endfitting.

The liquid-impervious barrier layer is produced according to the invention by continuous extrusion of a single-phase aliphatic polyketone comprising at least 80% by volume of an aliphatic polyketone as recited in claim 1, which provides a barrier layer with particularly good properties in terms of i.a. thermal insulation, notch sensitivity, blister and diffusion resistance to gases, such as H₂S and CO₂.

Thus, the method of the invention provides a flexible, unbonded pipe which is particularly suitable for the transportation of crude oil and the like, as already described above. The method further excels in being fast, free of undesired operational stops, without unnecessary product waste and hence ecomomically acceptable.

In case the unbonded flexible pipe comprises an internal metal carcass preferably made from stainless steel, the liquid-impervious barrier layer is extruded directly onto the exterior surface of said layer, however preferably onto a winding on said metal carcass. Such winding serves the purpose of allowing the metal carcass and the barrier layer to slide relative to each other during bending in connection with winding-up, laying out, and operation.

The extrusion equipment used in the method according to the invention comprises a distributor, a pipe head, and an extruder.

The temperature and flow is controlled in such manner that the mean temperature of the polymer in the distributor and pipe head does not exceed the melting point of the polymer by more than 15 °C, and the mean retention time of the polymer in the extruder, distributor, and pipe head does not exceed 20 minutes, while the local temperature of the polymer does not exceed the melting point of the polymer by more than 35 °C for a maximum of 5 minutes. Such control prevents unintended decomposition of the polymer material, thereby resulting in a barrier layer with the desired properties.

In order to obtain this positive result, the mean retention time of the polymer should not exceed 10 minutes. Likewise, the maximum retention time of the polymer in the extruder should not exceed 3 times the mean retention time.

Besides, for controlling said proces it is preferred that the extruder have at least 7 heating zones defined by the number of heating bands on the extruder with separate adjustment, and that the temperature in said heating zones be increasing or constant from inlet to outlet.

In addition it is also preferred that the distributor and cross-head be adjusted by at least 5 heating zones, and the temperatue in said zones should not deviate by more than 5 °C from the temperature set on the extruder.

The invention will now be explained in further detail by way of the following examples which in no way are considered to limit the scope of the invention.

### Example 1

In a full-scale production plant, a 15.25 cm (6 inches) metal carcass consisting of a folded metal band formed as an S-profile is coated with a layer of an aliphatic polyketone. The outer diameter of said carcass is about 167 mm. For extrusion use is made of an aliphatic polyketone composed of an E/P/CO terpolymer, i.e. R₁ is CH₃, R₂ is H, and n is about 0.05, and m is about 0.95. Use is made of a so-called Carilon RDP 229® from Shell having a melting point of 220-222 °C.

Extrusion is effected by use of a single worm extruder having a diameter of 120 mm, an L/D ratio of 30, and with a single groove worm. Use is made of a conventional crosshead tool with a heart leaf distributor. The metal carcass is inserted into the center of the crosshead tool. Extrusion is effected at a thickness of about 8 mm at a rate of about 0.5 m/min. The temperature of the extruder is set to 220 °C in the initial zone and 235 °C in all subsequent zones. During the test, the temperature of the melt is stabilized at 235 °C.

Under such conditions extrusion may be effected in a stable manner and with a sufficient melting strength in the extrudant to allow it to maintain its shape around the carcass during cooling. Cooling is effected in a chamber by applying water by means of nozzles.

It is possible to extrude a barrier layer of satisfactory quality in lengths of more than 50 meters.

After more than 3 hours of extrusion, the extruder is disassembled, and no deposits of discoloured (cross-bound) material are found. During the entire extrusion period constant conditions prevailed in terms of power consumption of the worm engine, pressure and temperature, which are characteristics of a stable process. Thus, with the same temperature set it is likely that extrusion can be effected continuously for several days provided the temperature is not increased.

The extruded barrier layer has the same colour all over, which further indicates that no decomposition of the material has taken place.

### Example 2

A section of approx. 25 cm is cut out of the barrier layer consisting of the aliphatic polyketone of example 1 and removed from the metal carcass. This section is mounted in a rotating holder, and thin samples of a thickness of approx. 1 mm are cut out of the barrier layer by use of a knife. From each sample, a circular section is cut for permeation and diffusion measurements. The "time-lag method" described by James E. Shelby in "Gas Diffusion in Solids and Melts", ASM International, 1996, is applied.

The circular samples having a diameter of approx. 70 mm and a thickness of approx. 0.96 mm are mounted in a flat diffusion cell on a circular, porous, sintered metal support, through which gas may permeate, of a diameter of 60 mm encircled by a ring-formed metal support. This cell consists of two chambers, a primary high-pressure chamber and a secondary low-pressure chamber.

Carbon dioxide applied on the primary side at a moderate pressure of 2.0 MPa is used as permeating gas. The cell is thermostated at 70 °C. As the gas permeates through the polymer, pressure is gradually building up on the secondary side. The effective diffusion diameter is 60 mm. The permeating gas is detected by a presssure valve opening at a pre-set excess pressure of 2.0 kPa, with a secondary chamber volume of 20.9 cm³. Thus, with each opening of the valve, 0.33 cm³ of gas is permeated (at STP conditions).

The valve opens at equilibrium at intervals of 40.8 minutes in average, i.e. the permeability is 1.36 x 10⁻⁴ cm³/sec. corresponding to a permeability for the material of 2.4 x 10⁻⁸ cm³ cm/cm² Bar sec. From a "time-lag" of approx. 27120 seconds, a diffusivity of 5.0 x 10⁻⁸ cm²/sec. can be calculated.

These results correspond well with the values for permeability of 3 x 10⁻⁸ cm³/cm² sec. Bar at 70 °C substantiated by Shell Chemicals.

### Example 3

By use of the same equipment as mentioned in example 1, a polymer having the same composition but of a higher molecular weight was extruded. Use was made of a so-called Carilon CXP 1106 from Shell Chemicals.

Extrusion was effected on a 15.25 cm (6 inches) metal carcass having a 15.25 cm inner diameter. The temperatur in the extruder was set to 250 °C in the initial zone, 230 °C in the subsequent zones, and 235 °C in the major part of the heating zones of the crosshead tool, except for the last zones where the metal carcass is in close contact with the crosshead and where the temperature is set to 250 °C. Extrusion is effected at a thickness of approx. 7 mm.

Extrusion effected at a rate of 0.5 meter/min. and for a period of 2 hours produced a barrier layer of a satisfactory quality lengths of more than 50 meters.

The process was stable without any changes in pressure, temperature and power consumption, which indicates that it is possible to effect a continuous extrusion in a stable process for several days. The workpiece could be wound up and treated like corresponding semi-manufactured products of other materials.

In samples of said liner, cut in chop form of a thickness of approx. 2.0 mm in longitudinal direction, as provided by the ASTM 638 standard, a tensile test performed at 50 mm/min at 23 °C measured a tensile strength of 50.8 MPa and an elongation after fracture of 340-380%.

This corresponds well with the technical documentation produced by Shell Chemicals, which mentions a tensile strength of 63 MPa and an elongation after fracture of 230 to 300% at 23 °C (presumably samples produced by injection moulding).

Thus, the above extrusion does not reduce the stiffness of the material.

## Claims

1. A flexible, unbonded continuous high-pressure pipe, which pipe is composed of several layers comprising at least one inner barrier layer, at least one tubular liquid-permeable reinforcement layer surrounding the barrier layer and a tubular outer sheath surrounding the tubular reinforcement layer(s), at least one of the liquid-impervious barrier layers being provided by continuous extrusion of a single-phase aliphatic polyketone polymer, which polymer comprises at least 80% by volume of an aliphatic polyketone having the formula (I)
[[-CHR₁CH₂(C=O)-]ₙ[-CHR₂CH₂(C=O)-]ₘ]ₚ (I)
where R₁ and R₂ are mutually different and independently mean hydrogen or an alkyl group, preferably methyl-, ethyl-, propyl-, pentyl-, or heptyl-, and n + m = 1, where n is preferably less than 0.5, in particular preferably between 0.02 and 0.08, and p is an integer, preferably an integer between 500 and 5000, and where the two comonomers are randomly distributed or blocked.

2. The flexible, unbonded pipe according to claim 1, **characterized in** having a length of at least 50 meters.

3. The flexible, unbonded pipe according to claim 1 or 2, **characterized in that** the liquid-impervious barrier layer consists of a single-pnase aliphatic polyketone polymer comprising at least 90% by volume, preferably at least 95% by volume, of an aliphatic polyketone having the formula (I).

4. The flexible, unbonded pipe according to claims 1 to 3, **characterized in that** R₁ is CH₃ and R₂ is H.

5. The flexible, unbonded pipe according to claims 1 to 3, **characterized in that** n = 0, and R₂ is preferably H.

6. The flexible, unbonded pipe according to claims 1 to 3, **characterized in that** R₁ is CH₃, R₂ is H, and n is less than 0.10, preferably between 0.02 and 0.08.

7. The flexible, unbonded pipe according to claims 1 to 3, **characterized in that** R₁ is alkyl, R₂ is H, and n is less than 0.10

8. The flexible, unbonded pipe according to claims 1 to 7, **characterized in that** the pipe further comprises a tubular inner metal cylinder.

9. The flexible, unbonded pipe according to claim 8, **characterized in that** the tubular inner metal cylinder is composed of a liquid permeable metal carcass.

10. The flexible, unbonded pipe according to claims 8 to 9, **characterized in that** the tubular inner metal cylinder preferably is made from stainless steel.

11. The flexible, unbonded pipe according to claims 8 to 10, **characterized in that** the liquid-impervious barrier layer is extruded directly onto the exterior surface of the tubular inner metal cylinder, preferably onto one or more windings on said tubular inner metal cylinder.

12. The flexible, unbonded pipe according to claims 1 to 11, **characterized in that** the inner barrier layer has a thickness of 5 to 12 mm, preferably from 6 to 10 mm.

13. The flexible, unbonded pipe according to claims 1 to 12, **characterized in that** the inner diameter of the pipe, measured as the inner diameter of the tubular inner metal cylinder, is at least 5 cm, preferably at least 15 cm.

14. A method of producing a flexible, unbonded high-pressure pipe according to claim 1 comprising the steps of
- optionally providing a tubular inner metal cylinder
- providing at least one liquid-impervious barrier layer by continuous extrusion
- reinforcing the pipe with at least one layer of metal band
- providing a liquid-impervious, tubular outer sheath
- assembling the tubular parts provided and sealing said parts at each end to form an endfitting,
wherein the liquid-impervious barrier layer is provided by continuous extrusion of a single-phase aliphatic polyketone polymer comprising at least 80% by volume of an aliphatic polyketone polymer of the formula (I)
[[-CHR₁CH₂(C=O)-]ₙ[-CHR₂CH₂(C=O)-]ₘ]ₚ (I)
where R₁ and R₂ are mutually different and independently mean hydrogen or an alkyl group, preferably methyl-, ethyl-, propyl-, pentyl-, or heptyl-, and n + m = 1, where n is preferably less than 0.5, in particular preferably between 0.02 and 0.08, and p is an integer, preferably an integer between 500 and 5000, and where the two comonomers are randomly distributed or blocked,
wherein the extrusion equipment used comprises a distributor, a crosshead, and an extruder, and
wherein the mean temperature of the polymer in the distributor and in the crosshead does not exceed the melting point of the polymer by more than 15 °C, and the mean retention time of the polymer in the extruder, distributor and crosshead does not exceed 20 minutes, while the local temperature of the polymer does not exceed the melting point of the polymer by more than 35 °C for a maximum period of 5 minutes.

15. The method according to claim 14, **characterized in that** the liquid-impervious barrier layer is comprised of a single-phase aliphatic polyketone polymer comprising at least 90% by volume, preferably at least 95% by volume, of an aliphatic polyketone polymer of the formula (I).

16. The method according to claims 14-15,**characterized in that** that tubular barrier layer is extruded directly onto a tubular inner metal cylinder, optionally with a winding provided between them.

17. The method according to claim 16, **characterized in that** the tubular inner metal cylinder is a metal carcass.

18. The method according to claims 16-17,**characterized in that** the tubular inner metal cylinder is made from stainless steel.

19. The method according to claims 14-18, **characterized in that** the mean retention time of the polymer in the extruder does not exceed 10 minutes.

20. The method according to any of the claims 14-19, **characterized in that** the maximum retention time of the polymer does not exceed 3 times the mean retention time.

21. The method according to any of the claims 14-20, **characterized in that** the extruder has at least 7 heating zones, and the temperature of said heating zones is increasing or constant measured from inlet to outlet.

22. The method according to any of the claims 14-20, **characterized in that** the distributor and crosshead are adjusted by at least 5 heating zones, and the temperature of said zones does not deviate by more than 5 °C from the temperature set in the extruder.

## Patentansprüche

1. Flexibles, nichtverbundenes Endlos-Hochdruckrohr, wobei das Rohr aus mehreren Schichten besteht, die wenigstens eine innere Sperrschicht, wenigstens eine rohrförmige flüssigkeitspermeable Verstärkungsschicht, welche die Sperrschicht umgibt, und einen rohrförmigen äußeren Mantel, der die rohrförmige(n) Verstärkungsschicht(en) umgibt, umfassen, wobei wenigstens eine der flüssigkeitsundurchlässigen Sperrschichten durch kontinuierliche Extrusion eines einphasigen aliphatischen Polyketonpolymers bereitgestellt wird, wobei das Polymer zu wenigstens 80 Volumen-% aus einem aliphatischen Polyketon mit der Formel (I) besteht
[[-CHR₁CH₂(C=O)-]ₙ[-CHR₂CH₂(C=O)-]ₘ]ₚ (I),
wobei R₁ und R₂ voneinander verschieden sind und unabhängig Wasserstoff oder eine Alkylgruppe, vorzugsweise eine Methyl-, Ethyl-, Propyl-, Pentyloder Heptylgruppe, bedeuten und n + m = 1 ist, wobei n vorzugsweise geringer als 0,5 ist, besonders bevorzugt zwischen 0,02 und 0,08 liegt, und p eine ganze Zahl, vorzugsweise eine ganze Zahl zwischen 500 und 5000, ist, und wobei die beiden Comonomere statistisch verteilt oder in Blockform vorliegen.

2. Flexibles nichtverbundenes Rohr gemäß Anspruch 1, **dadurch gekennzeichnet, daß** es eine Länge von wenigstens 50 Metern hat.

3. Flexibles nichtverbundenes Rohr gemäß Anspruch 1 oder 2, **dadurch gekennzeichnet, daß** die flüssigkeitsundurchlässige Sperrschicht aus einem einphasigen aliphatischen Polyketonpolymer besteht, das zu wenigstens 90 Volumen-%, vorzugsweise zu wenigstens 95 Volumen-%, aus einem aliphatischen Polyketon mit der Formel (I) besteht.

4. Flexibles nichtverbundenes Rohr gemäß den Ansprüchen 1 bis 3, **dadurch gekennzeichnet, daß** R₁ CH₃ ist und R₂ H ist.

5. Flexibles nichtverbundenes Rohr gemäß den Ansprüchen 1 bis 3, **dadurch gekennzeichnet, daß** n = 0 ist und R₂ vorzugsweise H ist.

6. Flexibles nichtverbundenes Rohr gemäß den Ansprüchen 1 bis 3, **dadurch gekennzeichnet, daß** R₁ CH₃ ist, R₂ H ist und n geringer als 0,10 ist, vorzugsweise zwischen 0,02 und 0,08 liegt.

7. Flexibles nichtverbundenes Rohr gemäß den Ansprüchen 1 bis 3, **dadurch gekennzeichnet, daß** R₁ Alkyl ist, R₂ H ist und n geringer als 0,10 ist.

8. Flexibles nichtverbundenes Rohr gemäß den Ansprüchen 1 bis 7, **dadurch gekennzeichnet, daß** das Rohr ferner einen rohrförmigen inneren Metallzylinder umfaßt.

9. Flexibles nichtverbundenes Rohr gemäß Anspruch 8, **dadurch gekennzeichnet, daß** der rohrförmige innere Metallzylinder aus einem flüssigkeitspermeablen Metallskelett besteht.

10. Flexibles nichtverbundenes Rohr gemäß den Ansprüchen 8 bis 9, **dadurch gekennzeichnet, daß** der rohrförmige innere Metallzylinder vorzugsweise aus Edelstahl hergestellt ist.

11. Flexibles nichtverbundenes Rohr gemäß den Ansprüchen 8 bis 10, **dadurch gekennzeichnet, daß** die flüssigkeitsundurchlässige Sperrschicht direkt auf die äußere Oberfläche des rohrförmigen inneren Metallzylinders extrudiert wird, vorzugsweise auf ein oder mehrere Windungen auf dem genannten rohrförmigen inneren Metallzylinder.

12. Flexibles nichtverbundenes Rohr gemäß den Ansprüchen 1 bis 11, **dadurch gekennzeichnet, daß** die innere Sperrschicht eine Dicke von 5 bis 12 mm, vorzugsweise 6 bis 10 mm, besitzt.

13. Flexibles nichtverbundenes Rohr gemäß den Ansprüchen 1 bis 12, **dadurch gekennzeichnet, daß** der Innendurchmesser des Rohrs, gemessen als der Innendurchmesser des rohrförmigen inneren Metallzylinders, wenigstens 5 cm, vorzugsweise wenigstens 15 cm, beträgt.

14. Verfahren zur Herstellung eines flexiblen nichtverbundenen Hochdruckrohrs gemäß Anspruch 1, umfassend die Schritte
- gegebenenfalls Bereitstellen eines rohrförmigen inneren Metallzylinders,
- Bereitstellen von wenigstens einer flüssigkeitsundurchlässigen Sperrschicht durch kontinuierliche Extrusion,
- Verstärken des Rohrs mit wenigstens einer Schicht aus einem Metallband,
- Bereitstellen eines flüssigkeitsundurchlässigen rohrförmigen äußeren Mantels,
- Zusammensetzen der bereitgestellten rohrförmigen Teile und Versiegeln der genannten Teile an jedem Ende, um ein Endstück zu bilden,
wobei die flüssigkeitsundurchlässige Sperrschicht durch kontinuierliche Extrusion eines einphasigen aliphatischen Polyketonpolymers bereitgestellt wird, welches zu wenigstens 80 Volumen-% aus einem aliphatischen Polyketonpolymer mit der Formel (I) besteht
[[-CHR₁CH₂(C=O)-]ₙ[-CHR₂CH₂(C=O)-]ₘ]ₚ (I),
wobei R₁ und R₂ voneinander verschieden sind und unabhängig Wasserstoff oder eine Alkylgruppe, vorzugsweise eine Methyl-, Ethyl-, Propyl-, Pentyloder Heptylgruppe, bedeuten und n + m = 1 ist, wobei n vorzugsweise geringer als 0,5 ist, besonders bevorzugt zwischen 0,02 und 0,08 liegt, und p eine ganze Zahl, vorzugsweise eine ganze Zahl zwischen 500 und 5000, ist, und wobei die beiden Comonomere statistisch verteilt oder in Blockform vorliegen,
wobei die verwendete Extrusionsausrüstung einen Verteiler, einen Querspritzkopf und einen Extruder umfaßt, und
wobei die mittlere Temperatur des Polymers in dem Verteiler und in dem Querspritzkopf den Schmelzpunkt des Polymers nicht um mehr als 15°C übersteigt und die mittlere Verweilzeit des Polymers in dem Extruder, Verteiler und Querspritzkopf 20 Minuten nicht übersteigt, während die lokale Temperatur des Polymers für einen maximalen Zeitraum von 5 Minuten den Schmelzpunkt des Polymers nicht um mehr als 35°C übersteigt.

15. Verfahren gemäß Anspruch 14, **dadurch gekennzeichnet, daß** die flüssigkeitsundurchlässige Sperrschicht aus einem einphasigen aliphatischen Polyketonpolymer besteht, das zu wenigstens 90 Volumen-%, vorzugsweise zu wenigstens 95 Volumen-%, aus einem aliphatischen Polyketonpolymer mit der Formel (I) besteht.

16. Verfahren gemäß den Ansprüchen 14-15, **dadurch gekennzeichnet, daß** die rohrförmige Sperrschicht direkt auf einen rohrförmigen inneren Metallzylinder extrudiert wird, wobei gegebenenfalls eine Windung dazwischen bereitgestellt wird.

17. Verfahren gemäß Anspruch 16, **dadurch gekennzeichnet, daß** der rohrförmige innere Metallzylinder ein Metallskelett ist.

18. Verfahren gemäß den Ansprüchen 16-17, **dadurch gekennzeichnet, daß** der rohrförmige innere Metallzylinder aus Edelstahl hergestellt ist.

19. Verfahren gemäß den Ansprüchen 14-18, **dadurch gekennzeichnet, daß** die mittlere Verweilzeit des Polymers in dem Extruder 10 Minuten nicht übersteigt.

20. Verfahren gemäß irgendeinem der Ansprüche 14-19, **dadurch gekennzeichnet, daß** die maximale Verweilzeit des Polymers nicht das 3fache der mittleren Verweilzeit übersteigt.

21. Verfahren gemäß irgendeinem der Ansprüche 14-20, **dadurch gekennzeichnet, daß** der Extruder wenigstens 7 Heizzonen hat und die Temperatur der genannten Heizzonen zunimmt oder konstant ist, gemessen vom Einlaß zum Auslaß.

22. Verfahren gemäß irgendeinem der Ansprüche 14-20, **dadurch gekennzeichnet, daß** der Verteiler und der Querspritzkopf durch wenigstens 5 Heizzonen eingestellt werden und die Temperatur der genannten Zonen um nicht mehr als 5°C von der in dem Extruder eingestellten Temperatur abweicht.

## Revendications

1. Tuyau continu non collé flexible pour hautes pressions, lequel tuyau étant composé de plusieurs couches comprenant au moins une couche intérieure d'écran, au moins une couche tubulaire de renfort perméable aux liquides, entourant la barrière d'écran, et un fourreau extérieur tubulaire entourant la ou les couche(s) tubulaire(s) de renfort, au moins une des couches d'écran imperméables aux liquides étant prévue par une extrusion continue d'un polymère de polykétone aliphatique mono-phase, lequel polymère comprend au moins 80 % en volume d'un polykétone aliphatique selon la formula (I) suivante :
[[-CHR₁CH₂(C=O)-]ₙ[-CHR₂CH₂(C=O)-]ₘ]ₚ (I)
dans laquelle R₁ et R₂ sont mutuellement différents et signifient, indépendamment, un groupe hydrogène ou un groupe alkyle, de préférence méthyle-, éthyle-, propyle-, pentyle- ou heptyle- et n + m = 1, n étant de préférence inférieur à 0,5, en particulier de préférence compris entre 0,02 et 0,08, et p étant un entier, de préférence un nombre entier compris entre 500 et 5 000 et dans laquelle les deux co-monomères sont distribués aléatoirement ou bloqués.

2. Tuyau flexible non collé selon la revendication 1, **caractérisé en ce qu**'il possède une longueur d'au moins 50 mètres.

3. Tuyau flexible non collé selon la revendication 1 ou 2, **caractérisé en ce que** la couche d'écran imperméable aux liquides est constituée en un polymère de polykétone aliphatique mono-phase comprenant au moins 90 % en volume, de préférence au moins 95 % en volume, d'un polykétone aliphatique ayant la formule (I).

4. Tuyau flexible non collé selon les revendications 1 à 3, **caractérisé en ce que** R₁ est du CH₃ et R₂ est de l'H.

5. Tuyau flexible non collé selon les revendications 1 à 3, **caractérisé en ce que** n = 0 et R₂ est, de préférence, de l'H.

6. Tuyau flexible non collé selon les revendications 1 à 3, **caractérisé en ce que** R₁ cst du CH₃, R₂ est de l'H et n est inférieur à 0,10, de préférence compris entre 0,02 et 0, 08.

7. Tuyau flexible non collé selon les revendications 1 à 3, **caractérisé en ce que** R₁ est un alkyle, R₂ est de l'H et n est inférieur à 0,10.

8. Tuyau flexible non collé selon les revendications 1 à 7, **caractérisé en ce que** le tuyau comprend en outre, un cylindre tubulaire métallique intérieur.

9. Tuyau flexible non collé selon la revendication 8, **caractérisé en ce que** le cylindre tubulaire métallique intérieur est composé d'une carcasse métallique perméable aux liquides.

10. Tuyau flexible non collé selon les revendications 8 et 9, **caractérisé en ce que** le cylindre tubulaire métallique intérieur est constitué, de préférence, en acier inoxydable.

11. Tuyau flexible non collé selon les revendications 8 à 10, **caractérisé en ce que** la couche d'écran imperméable aux liquides est extrudés directement sur la surface extérieure du cylindre tubulaire métallique intérieur, de préférence sur un ou plusieurs enroulements sur ledit cylindre tubulaire métallique intérieur.

12. Tuyau flexible non collé selon les revendications 1 à 11, **caractérisé en ce que** la couche d'écran intérieur a une épaisseur comprise entre 5 et 12 mm, de préférence de 6 à 10 mm.

13. Tuyau flexible non collé selon les revendications 1 à 12, **caractérisé en ce que** le diamètre intérieur du tuyau , mesuré en tant que le diamètre intérieur du cylindre tubulaire métallique intérieur, est d'au moins 5 cm, de préférence d'au moins 15 cm.

14. Procédé de production d'un tuyau non collé flexible pour hautes pressions selon la revendication 1, comprenant les étapes consistant à :
- prévoir, de manière optionnelle, un cylindre tubulaire métallique intérieur ;
- prévoir au moins une couche d'écran imperméable aux liquides par une extrusion continue ;
- renforcer le tuyau avec au moins une couche de bande métallique ;
- prévoir une enveloppe externe tubulaire imperméable aux liquides,
- assembler les parties tubulaires prévues et rendre étanches lesdites parties à chaque extrémité afin de former un ajustement d'extrémité ;
• pour lequel la couche d'écran imperméable aux liquides est prévue par une extrusion continue d'un polymère de polykétone aliphatique mono-phase comprenant au moins 80 % en volume d'un polykétone aliphatique selon la formule (I) suivante :
[[-CHR₁CH₂(C=O)-]ₙ[-CHR₂CH₂(C=O)-]ₘ]ₚ (I)
• dans laquelle R₁ et R₂ sont mutuellement différents et signifient, indépendamment, un groupe hydrogène ou un groupe alkyle, de préférence méthyle-, éthyle-, propyle-, pentyle- ou heptyle- et n + m = 1, n étant de préférence inférieur à 0,5, en particulier de préférence compris entre 0,02 et 0,08, et p étant un enlier, de préférence un nombre entier compris entre 500 et 5 000 et dans laquelle les deux co-monomères sont distribués aléatoirement ou bloqués,
• pour lequel l'équipement d'extrusion utilisé est constitué par un distributeur, un croisillon et un extrudeur, et
• pour lequel la température moyenne du polymère dans le distributeur et dans le croisillon ne dépasse pas le point de fusion du polymère de plus de 15°C et la durée moyenne de séjour du polymère dans l'extrudeur, le distributeur et le croisillon ne dépasse pas 20 mn, tandis que la température locale du polymère ne dépasse pas le point de fusion du polymère de plus de 35°C pendant une durée maximale de 5 minutes.

15. Procédé selon la revendication 14, **caractérisé en ce que** la couche d'écran imperméable au liquide est constituée en un polymère de polykétone aliphatique mono-phase comprenant au moins 90 % en volume, de préférence au moins 95 % en volume, d'un polykétone aliphatique ayant la formule (I).

16. Procédé selon les revendications 14 et 15, **caractérisé en ce que** la couche d'écran tubulaire est extrudée directement sur un cylindre tubulaire métallique intérieur, avec, de manière optionnelle, un enroulement prévu entre ceux-ci.

17. Procédé selon la revendication 16, **caractérisé en ce que** le cylindre tubulaire métallique intérieur est une carcasse métallique.

18. Procédé selon les revendications 16 et 17, **caractérisé en ce que** le cylindre tubulaire métallique intérieur est constitué à partir d'un acier inoxydable,

19. Procédé selon les revendications 14 à 18, **caractérisé en ce que** la durée moyenne de séjour du polymère dans l'extrudeur ne dépassa pas 10 minutes.

20. Procédé selon une quelconque des revendications 14 à 19, **caractérisé en ce que** la durée maximale de séjour du polymère ne dépasse pas 3 fois la durée moyenne de séjour.

21. Procédé selon une quelconque des revendications 14 à 20, **caractérisé en ce que** l'extrudeur possède au moins 7 zones de chauffage et **en ce que** la température desdites zones de chauffage est croissante ou constante, mesurée depuis l'ouverture d'entrée jusqu'à l'ouverture de sortie.

22. Procédé selon une quelconque des revendications 14 à 20, **caractérisé en ce que** la température du distributeur et du croisillon est ajustée par au moins 5 zones de chauffage et **en ce que** la température desdites zones ne dévie pas de plus de 5°C de la température établie dans l'extrudeur.
